# EUROPEAN PATENT APPLICATION

(11) **EP 3 783 724 A1**
(43) Date of publication of application: **24.02.2021**
(21) Application number: 18915357.0
(22) Date of filing: 17.04.2018
(51) Int. Cl.: H01M 10/0587

(54) **BATTERY CELL AND BATTERY**

(71) Applicant: Ningde Amperex Technology Limited, Zhangwan Town, Jiaocheng Zone Ningde City Fujian 352100 (CN)
(72) Inventor: DONG, Wenming, Ningde, Fujian 352100 (CN)
(74) Representative: Klunker IP Patentanwälte PartG mbB
(86) International application number: PCT/CN2018/083408
(87) International publication number: WO 2019/200538

(57) **Abstract**

The invention provides a battery core and a battery. The battery core includes a first electrode plate and a second electrode plate. The first electrode plate includes a first current collector and a first active material layer provided on the first current collector. The second electrode plate includes a second current collector and a second active material layer provided on the second current collector. The first current collector has a first starting section from a starting end to an area in which bending occurs for the first time, and the second current collector has a second starting section from a starting end to an area in which bending occurs for the first time. A surface of the first starting section that faces the second starting section is not provided with the first active material layer, a surface of the second starting section that faces the first starting section is not provided with the second active material layer, and a surface of the first starting section that extends away from the second starting section is provided with the first active material layer. The invention is intended to provide a battery core to at least reduce defects such as deformation of the battery core or wrinkling at a single side of a membrane, and to improve electrochemical performance and safety performance of the battery core.

## Description

### TECHNICAL FIELD

The invention relates to the field of electrochemistry, and in particular, to a battery core and a battery.

### BACKGROUND

With the commercialization of batteries, there is increasingly stronger demand for batteries in the market, but safety risks caused by battery deformation and expansion still remain unsolved.

### SUMMARY

With respect to problems in the related art, the invention is intended to provide a battery core to at least reduce defects such as deformation of the battery core or wrinkling at a single side of a membrane, and to improve electrochemical performance and safety performance of the battery core.

To achieve the foregoing objective, the invention provides a battery core, including a first electrode plate and a second electrode plate. The first electrode plate includes a first current collector and a first active material layer provided on the first current collector. The second electrode plate includes a second current collector and a second active material layer provided on the second current collector. The first current collector has a first starting section from a starting end to an area in which bending occurs for the first time, and the second current collector has a second starting section from a starting end to an area in which bending occurs for the first time. A surface of the first starting section that faces the second starting section is not provided with the first active material layer, a surface of the second starting section that faces the first starting section is not provided with the second active material layer, and a surface of the first starting section that extends away from the second starting section is provided with the first active material layer.

According to an embodiment of the invention, a surface of the second starting section that extends away from the first starting section is provided with the second active material layer.

According to an embodiment of the invention, a surface of the second starting section that extends away from the center of the battery core is not provided with the second active material layer.

According to an embodiment of the invention, a surface of the second current collector that faces the center of the battery core is a side A, and a surface of the second current collector that extends away from the center of the battery core is a side B, where the side A and the side B are both provided with the second active material layer, a starting point of the second active material layer on the side A is closer to the starting end of the first current collector than a starting point of the second active material layer on the side B, and an ending point of the second active material layer on the side B is closer to a terminating end of the first current collector than an ending point of the second active material layer on the side A.

According to an embodiment of the invention, the first current collector further has a first terminating section, where neither of two sides of the first terminating section is provided with the first active material layer, and neither of surfaces of the second current collector that are opposite to the two sides of the first terminating section is provided with the second active material layer.

According to an embodiment of the invention, the battery core further includes: a first tab that is electrically connected to the first current collector; and a second tab that is electrically connected to the second current collector, where the first tab and the second tab are provided in the first starting section and the second starting section respectively.

According to an embodiment of the invention, the battery core further includes: a first tab that is electrically connected to the first current collector; and a second tab that is electrically connected to the second current collector, where the first tab and the second tab are provided in the first terminating section of the first current collector and the second terminating section of the second current collector respectively.

According to an embodiment of the invention, a surface of the second starting section that extends away from the first starting section is provided with the second active material layer, and a surface of the second starting section that extends away from the center of the battery core is not provided with the second active material layer.

According to an embodiment of the invention, a plane located between the first starting section and the second starting section divides the battery core into a first half portion and a second half portion, where a quantity of layers of the first electrode plate in the first half portion is equal to a quantity of layers of the first electrode plate in the second half portion; and a quantity of layers of the second electrode plate in the first half portion is equal to a quantity of layers of the second electrode plate in the second half portion.

According to an embodiment of the invention, a battery is provided, including a packaging film, and further including the battery core according to claims 1 to 9.

Beneficial technical effects of the invention lie in that, a battery core according to the invention could reduce defects such as deformation of the battery core or wrinkling at a single side of a membrane, and improve electrochemical performance and safety performance of the battery core.

### BRIEF DESCRIPTION OF DRAWINGS

To describe the technical solutions in the embodiments of the invention or in the prior art more clearly, the following briefly describes the accompanying drawings required for describing the embodiments. Apparently, the accompanying drawings in the following description show merely some embodiments of the invention, and a person of ordinary skill in the art may still derive other drawings from these accompanying drawings without creative efforts.
FIG. 1 is a schematic structural diagram of a battery core in the prior art;
FIG. 2 is a schematic structural diagram of a battery core according to an embodiment of this application;
FIG. 3 is a schematic structural diagram of a battery core according to another embodiment of this application;
FIG. 4 is a schematic structural diagram of a battery core according to another embodiment of this application; and
FIG. 5 is a schematic structural diagram of a battery core according to still another embodiment of this application.

### DESCRIPTION OF EMBODIMENTS

The embodiments of the invention are described in detail below with reference to the accompanying drawings. It should be noted that the following embodiments can be combined with or partially replaced by each other in any possible manner.

In practical applications, various types of battery cores are usually required to meet different needs, such as a chunky battery core (with a length-to-width ratio ≤ 1), a broad battery core (with a width ≥ 70 mm and a length ≥ 110 mm), and an ultra-thin battery core (with a thickness ≤ 2.3 mm). A length direction of the battery core refers to a direction that is flush with a positive tab and a negative tab of the battery core, and a width direction of the battery core refers to a direction that is perpendicular to the positive tab and the negative tab of the battery core. However, these battery cores have large safety risks.

For the broad battery core and the ultra-thin battery core, a large horizontal tension is applied per unit area of a separator during winding, which induces a large probability of deformation of the battery core. In addition, a single-sided area in an anode is also prone to wrinkling and stripping, which in turn leads to deformation of the battery core as well as degradation in cyclic expansion of the battery core.

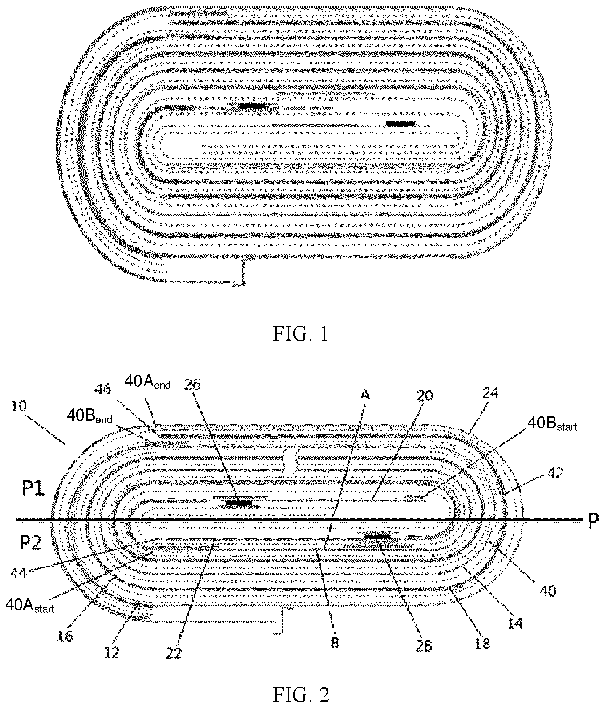

More severely, as shown in FIG. 1, for a chunky battery core, a winding structure shown in FIG. 1 is usually adopted. The battery core has four layers of unenclosed-winding separators inside, which makes a disadvantageous initial energy density for the battery core. In addition, an upper part and a lower part of a spool of the battery core are structurally asymmetric, and the anode has a single-sided area. During a charge or discharge process, the battery core is prone to bend to a side with fewer layers, which causes the battery core to deform, increases cyclic expansion, and makes a disadvantageous energy density after the cycling. Therefore, large safety risks exist.

In order to overcome the above problems, this application provides a battery core 10. First, refer to FIG. 2, which illustrates an example structure of a battery core 10 according to an embodiment of this application. The battery core 10 includes a first electrode plate 16 and a second electrode plate 12. The first electrode plate 16 has a first current collector 18 and a first active material layer 42 provided on the first current collector 18, and the second electrode plate 12 has a second current collector 14 and a second active material layer 40 provided on the second current collector 14. Further, as shown in FIG. 2, the first current collector 18 has a first starting section 22 from a starting end 44 to an area in which bending occurs for the first time (the first starting section 22 in this embodiment and this application does not include a bending area). The second current collector 14 has a second starting section 20 from a starting end to an area in which bending occurs for the first time (the second starting section 20 in this embodiment and this application does not include a bending area). A surface of the first starting section 22 that faces the second starting section 20 is not provided with the first active material layer 42, and a surface of the second starting section 20 that faces the first starting section 22 is not provided with the second active material layer 40. In other words, the surfaces of the first starting section 22 and the second starting section 20 that face each other are presented as naked surfaces with no active material layer provided. In addition, a surface of the first starting section 22 that extends away from the second starting section 20 is provided with the first active material layer 42.

In the foregoing embodiment, the innermost single-sided areas (that is, the first starting section 22 and the second starting section 20) of the first electrode plate 16 and the second electrode plate 12 of the battery core 10 are under stress in an open-loop manner, which means that a force applied to a side of the electrode plate can be released on the other side. This could effectively reduce the defect of wrinkling at the inner electrode plate, and also improve the energy density of the battery core.

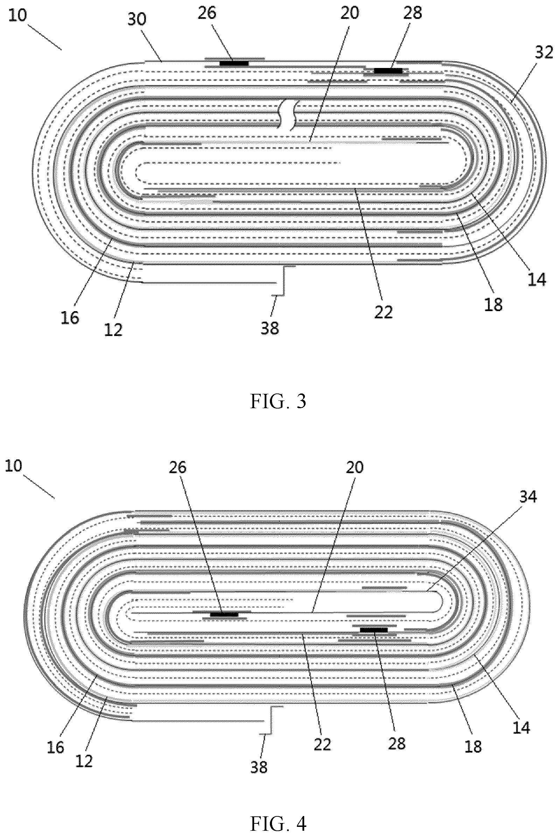

As shown in FIG. 3, in an embodiment of this application, a surface of the second starting section 20 that extends away from the first starting section 22 is provided with the second active material layer 40, such that in the embodiment shown in FIG. 3, the first starting section 22 and the second starting section 20 are both current collector sections coated with active material layers on one side. Only surfaces of the first starting section 22 and the second starting section 20 that extend away from each other are coated with the active material layers, while the surfaces that face each other are not coated with active material layers and presented as naked surfaces, such that the first starting section 22 and the second starting section 20 are under stress in an open-loop manner, effectively reducing wrinkling at the inner electrode plate.

As shown in FIG. 4, in another embodiment of this application, a surface of the second starting section 20 that extends away from the center of the battery core is not provided with the second active material layer 40, such that the second starting section 20 is a double-naked-surface current collector section having both sides not coated with active material layers, which makes the second starting section 20 under stress in an open-loop manner, thereby effectively reducing wrinkling at the inner electrode plate.

Referring to FIG. 2, in an embodiment of this application, a surface of the second current collector 14 that faces the center of the battery core is a side A, and a surface that extends away from the center of the battery core is a side B, and the side A and the side B are both provided with the second active material layer 40. A starting point 40Aₛₜₐᵣₜ of the second active material layer 40 on the side A is closer to the starting end 44 of the first current collector 18 than a starting point 40Bₛₜₐᵣₜ of the second active material layer 40 on the side B. As the side B extends away from the center of the battery core and the first active material layer faces the side B of the second starting section 20, it is desirable that the second active material layer 40 spreads as much as possible on the side B of the second starting section 20. This requires that the starting point 40Aₛₜₐᵣₜ of the second active material layer 40 on the side A be located away from the starting end 44 of the first current collector as much as possible. However, as the side A faces the center of the battery core, and the surface of the first starting section 22 that faces the side A of the second starting section 20 is provided with the first active material layer, for a higher energy density, the starting point 40Bₛₜₐᵣₜ of the second active material layer 40 on the side B is required to be located close to the starting end 44 of the first current collector as much as possible. This requires a design that the starting point 40Aₛₜₐᵣₜ of the second active material layer 40 on the side A is closer to the starting end 44 of the first current collector 18 than the starting point 40Bₛₜₐᵣₜ of the second active material layer 40 on the side B, and an ending point 40B_{end} of the second active material layer 40 on the side B is closer to a terminating end 46 of the first current collector 18 than an ending point 40A_{end} of the second active material layer 40 on the side A. The 40A_{end} is closer to the outside of the battery core 10 than the 40B_{end}, and the terminating end 46 may easily pierce through the second current collector 14 and come into contact with a packaging bag on an outer surface of the battery core 10. As the second current collector 14 is mostly made of copper foil, and the packaging bag contains an aluminum foil layer, the copper foil of the second current collector 14 and the aluminum foil layer in the packaging bag may have electrochemical corrosion in the presence of electrolyte after the second current collector is pierced. Therefore, the ending point 40B_{end} of the second active material layer 40 on the side B is technically required to be located closer to the terminating end 46 of the first current collector 18 than the ending point 40A_{end} of the second active material layer 40 on the side A, thereby protecting the terminating end 46.

As shown in FIG. 3, in an embodiment of this application, the first current collector 18 further has a first terminating section 32, where neither of two sides of the first terminating section 32 is provided with the first active material layer 42, and neither of surfaces of the second current collector 14 that are opposite to the two sides of first terminating section 32 is provided with the second active material layer 40.

According to an embodiment of this application, the battery core 10 further includes a first tab 28 that is electrically connected to the first current collector 18 and a second tab 26 that is electrically connected to the second current collector 14. As shown in FIG. 2, in an example embodiment of this application, the first tab 28 and the second tab 26 are provided on the first starting section 22 and the second starting section 20 respectively. Alternatively, as shown in FIG. 3, in another example embodiment of this application, the first tab 28 and the second tab 26 are provided on the first terminating section 32 of the first current collector 18 and the second terminating section 30 of the second current collector 14 respectively.

As shown in FIG. 3, in an embodiment of this application, the first terminating section 32 and the second terminating section 30 each include a first empty foil tail section and a second empty foil tail section, where two sides of the first empty foil tail section and the second empty foil tail section are presented as naked surfaces with no active substance coated. The first tab 28 and the second tab 26 are located on the first empty foil tail section and the second empty foil tail section respectively.

As shown in FIG. 4, the second current collector 14 includes a plain foil section 34 extending from the starting end and having two sides that are naked surfaces. Different from a mating structure shown in FIG. 2 and FIG. 3, where the starting end of the first current collector 18 and the starting end of the second current collector 14 are located on two sides of the battery core respectively, in the embodiment shown in FIG. 4, the plain foil section 34 and the first starting section 22 have starting ends substantially flush with each other and are wound sequentially. The second tab 26 is provided on the plain foil section 34, and the first tab 28 is provided on the first starting section 22.

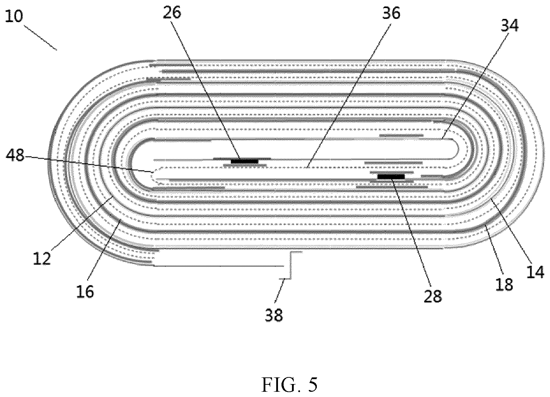

As shown in FIG. 5, the battery core 10 further includes a diaphragm 48 that is provided between and separates the first current collector 18 and the second current collector 14. The diaphragm 48 extends on two sides of the first starting section 22 in a continuous and enclosed manner and is located only on one side of the plain foil section 34. In this embodiment, the winding manner of the separator is changed to eliminate the innermost unenclosed-winding separator, so that the inner separator is enclosed and continuous, further increasing the energy density of the battery core 10.

In an embodiment of this application, as shown in FIG. 2, a plane P between the first starting section 22 and the second starting section 20 divides the battery core 10 into a first half portion P1 and a second half portion P2. A quantity of layers of the first electrode plate 16 in the first half portion P1 is equal to a quantity of layers of the first electrode plate 16 in the second half portion P2, and a quantity of layers of the second electrode plate 12 in the first half portion P1 is equal to a quantity of layers of the second electrode plate 12 in the second half portion P2.

In an embodiment of this application, the first electrode plate 16 is a cathode plate, and the second electrode plate 12 is an anode plate.

In addition, in an embodiment of this application, as shown in FIG. 2 to FIG. 5, surfaces of the first bending areas of the first current collector 18 and the second current collector 14 that face the center of the battery core are provided with insulation paste. In another embodiment of this application, as shown in FIG. 2 to FIG. 5, insulation paste is provided at an end of the first active material layer 42 and an end of the second active material layer 40. In another embodiment of this application, as shown in FIG. 2 to FIG. 5, insulation paste is provided at two sides of the first tab 28 and the second tab 26.

The battery center described in this application refers to the center of a graph enclosed by a first plane, a second plane, the first starting section 22, and the second starting section 20, where the first plane (not shown in the figures) passes through the starting end of the first current collector 18 and is perpendicular to the first starting section 22, and the first plane is parallel to a thickness direction of the tab 26; the second plane (not shown in the figures) passes through the starting end of the second current collector 14 and is perpendicular to the second starting section 20, and the second plane is parallel to the thickness direction of the tab 26.

The above descriptions are only preferred embodiments of the invention and are not used to limit the invention. Various modifications and changes may be made by those skilled in the art. Any modification, equivalent replacement, or improvement made without departing from the spirit and principle of the invention shall fall within the protection scope of the invention.

## Claims

1. A battery core (10), comprising a first electrode plate (16) and a first electrode plate (12), wherein the first electrode plate (16) comprises a first current collector (18) and a first active material layer (42) provided on the first current collector (18); and the first electrode plate (12) comprises a second current collector (14) and a second active material layer (40) provided on the second current collector (14);
the first current collector (18) has a first starting section (22) from a starting end to a first bending portion thereof, and the second current collector (14) has a second starting section (20) from a starting end to a first bending portion thereof; wherein
a surface of the first starting section (22) facing the second starting section (20) is not provided with the first active material layer (42), a surface of the second starting section (20) facing the first starting section (22) is not provided with the second active material layer (40), and a surface of the first starting section (22) that extends away from the second starting section (20) is provided with the first active material layer (42).

2. The battery core (10) according to claim 1, wherein a surface of the second starting section (20) extending away from the first starting section (22) is provided with the second active material layer (40).

3. The battery core (10) according to claim 1, wherein a surface of the second starting section (20) extending away from a center of the battery core (10) is not provided with the second active material layer (40).

4. The battery core (10) according to claim 1, wherein a surface of the second current collector (14) that faces a center of the battery core (10) defines a side A, and a surface of the second current collector (14) that extends away from the center of the battery core (10) defines a side B, wherein the side A and the side B are both provided with the second active material layer (40), a starting point of the second active material layer (40) on the side A is closer to the starting end of the first current collector (18) than a starting point of the second active material layer (40) on the side B, and an ending point of the second active material layer (40) on the side B is closer to a terminating end (46) of the first current collector (18) than an ending point of the second active material layer (40) on the side A.

5. The battery core (10) according to claim 1, wherein the first current collector (18) further has a first terminating section (32), and neither of two sides of the first terminating section (32) is provided with the first active material layer (42), and neither of surfaces of the second current collector (14) that are opposite to the two sides of the first terminating section (32) is provided with the second active material layer (40).

6. The battery core (10) according to claim 1, further comprising:
a first tab (28) that is electrically connected to the first current collector (18); and
a second tab (26) that is electrically connected to the second current collector (14), wherein
the first tab (28) and the second tab (26) are provided in the first starting section (22) and the second starting section (20) respectively.

7. The battery core (10) according to claim 5, further comprising:
a first tab (28) that is electrically connected to the first current collector (18); and
a second tab (26) that is electrically connected to the second current collector (14), wherein
the first tab (28) and the second tab (26) are provided in the first terminating section (32) of the first current collector (18) and a second terminating section (30) of the second current collector (14) respectively.

8. The battery core (10) according to claim 6, wherein a surface of the second starting section (20) that extends away from the first starting section (22) is provided with the second active material layer (40), and a surface of the second starting section (20) that extends away from the center of the battery core (10) is not provided with the second active material layer (40).

9. The battery core (10) according to claim 1, wherein a plane (P) located between the first starting section (22) and the second starting section (20) divides the battery core (10) into a first half portion (PI) and a second half portion (P2), wherein:
a quantity of layers of the first electrode plate (16) in the first half portion (PI) is equal to a quantity of layers of the first electrode plate (16) in the second half portion (P2); and
a quantity of layers of the first electrode plate (12) in the first half portion (PI) is equal to a quantity of layers of the first electrode plate (12) in the second half portion (P2).

10. A battery, comprising a packaging film, and further comprising the battery core (10) according to any one of claims 1 to 9.
